(19) Europäisches Patentamt
European Patent Office
Office européen des brevets

(11) **EP 3 506 556 B1**

(12) **FASCICULE DE BREVET EUROPEEN**

(45) Date de publication et mention
de la délivrance du brevet:
**05.08.2020 Bulletin 2020/32**

(51) Int Cl.:
*H04L 9/08* (2006.01)          *H04L 9/32* (2006.01)

(21) Numéro de dépôt: **18215897.2**

(22) Date de dépôt: **26.12.2018**

(54) **MÉTHODE D'ÉCHANGE DE CLÉS AUTHENTIFIÉ PAR CHAINE DE BLOCS**

VERFAHREN ZUM AUTHENTIFIZIERTEN SCHLÜSSELAUSTAUSCH DURCH EINE BLOCKCHAIN

METHOD OF AUTHENTICATED KEY EXCHANGE VIA BLOCKCHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2017 FR 1763393**

(43) Date de publication de la demande:
**03.07.2019 Bulletin 2019/27**

(73) Titulaire: **Commissariat à l'énergie atomique et aux énergies alternatives
75015 Paris (FR)**

(72) Inventeur: **HENNEBERT, Christine
38054 Grenoble Cedex 9 (FR)**

(74) Mandataire: **Brevalex
56, Boulevard de l'Embouchure
B.P. 27519
31075 Toulouse Cedex 2 (FR)**

(56) Documents cités:
• MCCORRY PATRICK ET AL: "Authenticated Key Exchange over Bitcoin", 9 décembre 2015 (2015-12-09), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047412487, ISSN: 0302-9743 ISBN: 978-3-642-16065-3 [extrait le 2015-12-09] * abrégé * * page 8; tableau 1 * * page 9; figure 2 * * Section 3.3 "Diffie-Hellman-over-Bitcoin Protocol"; page 10 *

• Tatsuya Kyogoku ET AL: "A Note on Authenticated Key Exchange in Cryptocurrency", 2016 Symposium on Cryptography and Information Security (SCIS 2016), 22 janvier 2016 (2016-01-22), pages 19-22, XP055497256, Extrait de l'Internet: URL:https://security-kouza.github.io/paper /SCIS2016_kyogoku.pdf [extrait le 2018-08-03]

• BUI THANH ET AL: "Key Exchange with the Help of a Public Ledger", 29 novembre 2017 (2017-11-29), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047455716, ISSN: 0302-9743 ISBN: 978-3-642-16065-3 [extrait le 2017-11-29] * abrégé * * Chapitre 4: "Public-Ledger-Based Key Exchange"; pages 128-131 *

• P Sivakumar ET AL: "Privacy based decentralized Public Key Infrastructure (PKI) implementation using Smart contract in Blockchain", 2nd Advance Workshop on Blockchain: Technology, Applications, Challenges, 17 décembre 2017 (2017-12-17), pages 1-6, XP055497247, Extrait de l'Internet: URL:https://isrdc.iitb.ac.in/blockchain/wo rkshops/2017-iitb/papers/paper-11%20-%20De centralized%20PKI%20in%20blockchain%20and %20Smart%20contract.pdf [extrait le 2018-08-03]

EP 3 506 556 B1

**Description**

**DOMAINE TECHNIQUE**

La présente invention concerne de manière générale la cryptographie et plus particulièrement la génération d'un canal sécurisé entre pairs au moyen d'une clé secrète. Elle concerne également la technique des chaines de blocs (*blockchain*).

**ÉTAT DE LA TECHNIQUE ANTÉRIEURE**

La génération d'un canal sécurisé en dispositifs distants, également dénommés dans la suite « pairs », suppose le partage d'une clé secrète entre ces dispositifs. Ce partage peut être réalisé par une distribution manuelle des clés, préalablement à toute communication sur le canal, ou bien au moyen d'un protocole d'échange de clés de type Diffie-Hellmann utilisant un cryptosystème asymétrique. On rappelle que, dans un protocole d'échange de clés de type Diffie-Hellman, chaque dispositif distant dispose d'un couple de clés asymétrique (clé privée, clé publique). La clé privée d'un dispositif émetteur est conservée secrète par ce dernier et n'est en particulier jamais divulguée au dispositif destinataire. Elle sert à chiffrer ou signer des messages et à identifier le dispositif émetteur. En revanche, la clé publique est connue du dispositif destinataire et sert à déchiffrer des messages ou à vérifier la signature du dispositif émetteur. Le but du protocole d'échange de clés est de permettre, à partir d'éléments publics d'un cryptosystème échangés sur un canal non sécurisé, à chaque dispositif distant de calculer indépendamment une même clé secrète qui servira à établir un canal sécurisé entre eux.

Lorsque le cryptosystème est basé sur une courbe elliptique $E\left(\mathbb{F}_q\right)$ définie sur un corps fini $\mathbb{F}_q$ et caractérisé par les paramètres de domaine (*q,a,b,G,n, h*) où *q* est le nombre d'éléments du corps, *a,b* sont les paramètres de la courbe elliptique, *G* est un point générateur, *n* est l'ordre de *G* dans le groupe additif $E(\mathbb{F}_q)$,

$$h = \frac{\left|E(\mathbb{F}_q)\right|}{n}$$

est le cofacteur de *G* dans ce groupe, $\left|E(\mathbb{F}_q)\right|$ est l'ordre du groupe $E(\mathbb{F}_q)$. Chaque dispositif distant peut choisir une clé privée *sk* parmi les entiers [1,*n*-1], la clé publique correspondante étant donnée par les coordonnées du point *Pk = sk.G*. On rappelle que rechercher *sk* à partir de *Pk* revient à rechercher une solution au problème ECLDP (*Elliptic Curve Discrete Logarithm Problem*), actuellement impossible à résoudre dans un temps polynomial.

Si Alice et Bob sont les deux pairs correspondant aux deux dispositifs distants, un protocole d'échange de clés de Diffie-Hellmann utilisant un cryptosystème elliptique (protocole ECDH) peut être décrit par les étapes suivantes :

Alice choisit un nombre entier *a* qui restera secret, calcule la clé publique éphémère, $P_a = a.G$, et la transmet à Bob.

De manière similaire, Bob choisit un entier b qui restera secret, calcule la clé publique éphémère, $P_b = b.G$, et la transmet à Alice.

A la réception de $P_b$, Alice calcule $a.P_b = ab.G$.

A la réception de $P_a$, Bob calcule $b.P_a = ba.G$.

Alice et Bob partagent désormais un élément secret consistant en un point de la courbe elliptique, *ab.G*. Ils peuvent par exemple appliquer une fonction de hachage, préalablement convenue entre eux, à l'une des coordonnées du point en question pour obtenir une clé de session symétrique avec laquelle ils chiffrent les données sur le canal.

Une limitation importante du protocole d'échange de clés ci-dessus est qu'il n'est pas immun contre une attaque de type Man-In-the-Middle. En effet, un attaquant, Eve, peut s'interposer entre Alice et Bob, faire croire à Alice qu'elle échange avec Bob et à Bob qu'il échange avec Alice. En mettant en œuvre le protocole décrit ci-dessus, Eve choisit un premier entier *x* et partage un premier élément secret *axG* avec Alice, puis choisit un second entier *y* et partage un second élément secret *byG* avec Bob. Eve peut ainsi créer un premier canal sécurisé avec Alice et un second canal sécurisé avec Bob. Lorsqu'Alice croit transmettre des données de manière sécurisée à Bob, elle les fournit en fait à Eve. Réciproquement, lorsque Bob croit transmettre des données de manière sécurisée à Alice, il les transmet en fait également à Eve.

Une solution connue pour remédier à ce type d'attaque est d'identifier l'émetteur de chaque clé publique. Ainsi, Alice transmet à Bob non seulement sa clé publique éphémère $P_a = a.G$ mais aussi une signature numérique de $P_a$, signée avec sa clé privée (par exemple au moyen d'un algorithme ECDSA). Bob doit alors disposer de la clé publique d'Alice pour vérifier la signature en question. Si la vérification est positive, cela signifie que la clé publique éphémère a bien été émise par Alice et non pas un tiers. Bien entendu, réciproquement, Bob transmet à Alice sa clé publique éphémère $P_b = b.G$ accompagnée de la signature de $P_b$ au moyen de la clé privée de Bob, et Alice procède à la vérification de cette signature au moyen de la clé publique de Bob pour authentifier la provenance de la clé publique éphémère.

Cette solution n'est toutefois que partiellement satisfaisante dans la mesure où la transmission de la clé publique d'Alice à Bob (ou celle de Bob à Alice) sur un canal non sécurisé est elle-même susceptible de faire l'objet d'une attaque de type « Man-in-the-Middle ». Afin de lier la clé publique d'un émetteur avec son identité, on utilise un certificat numérique (au format X.509 ou bien certificat implicite, par exemple) délivré par une autorité de certification. Il en résulte que le protocole de Diffie-Hellman nécessite la présence d'un tiers de confiance pour être robuste aux attaques de type « Man-in-the-Middle ).

Afin de se passer d'un tiers de confiance et en particulier d'une autorité de certification centralisée, il a été proposé de recourir à une chaine de blocs telle que Bitcoin pour effectuer un échange de clés selon le protocole de Diffie-Hellmann On rappelle qu'une chaine de blocs est un registre distribué et sécurisé de toutes les transactions effectuées depuis le démarrage de la chaine. Une introduction complète à la chaine de blocs Bitcoin pourra être trouvée dans l'ouvrage de A.M. Antonopoulos intitulé « Mastering Bitcoin » publié en 2015 aux éditions O'Reilly.

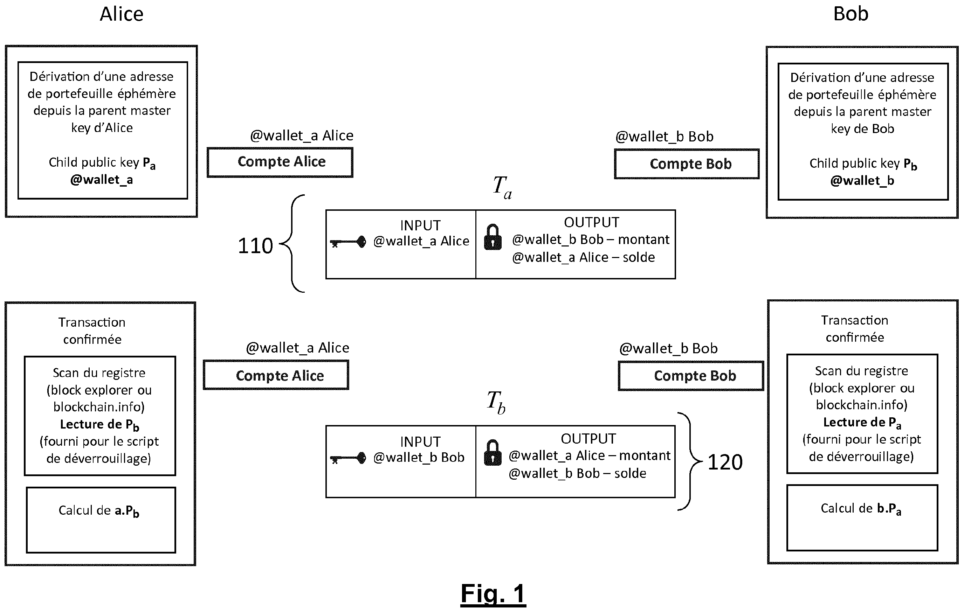

La Fig. 1 représente une telle méthode d'échange de clés authentifié par une chaine de blocs.

Préalablement à l'échange de clés, on suppose qu'Alice et Bob ont chacun généré de manière indépendante une clé privée (notée $a$ pour Alice et $b$ pour Bob) et, à partir de la clé publique correspondante ($P_a = aG$ pour Alice et $P_b = bG$ pour Bob), par hachage, une adresse de portefeuille éphémère (notée @wallet_a Alice pour Alice et @wallet_b Bob pour Bob). Les adresses éphémères ne seront utilisées dans le cadre des transactions supportant cet échange. Les portefeuilles respectifs de Bob et Alice sont également supposés être crédités de cryptomonnaie en quantité suffisante.

Alice forme en 110 une transaction $T_a$ et celle-ci est diffusée aux nœuds du réseau Bitcoin. Après avoir été validée, incorporée dans un bloc et confirmée par minage, celle-ci fait partie du registre distribué (*distributed ledger*). De même, Bob forme en 120 une transaction $T_b$ et celle-ci est diffusée de proche en proche aux nœuds du réseau.

De manière générale, une transaction représente un transfert d'unités de cryptomonnaie d'une entrée (ou de plusieurs entrées) vers une sortie (ou vers plusieurs sorties). Une transaction est libellée en termes de UTXO (*Unspent Transaction Output*), chaque UTXO représentant un montant non dépensé par son propriétaire et étant verrouillé par un script de verrouillage. Pour pouvoir dépenser un UTXO, le propriétaire doit s'identifier en présentant à l'UTXO des éléments cryptographiques (généralement la clé publique et une signature générée à partir de la clé privée correspondante) sous la forme d'un script de déverrouillage. Si les éléments présentés dans le script de déverrouillage satisfont aux conditions spécifiées dans le script de verrouillage, la transaction est validée. On notera que dans Bitcoin, le script de déverrouillage le plus communément utilisé est *Pay-to-Public-Key-Hash* (P2PKH) et le script de verrouillage est *scriptSig.*

La transaction $T_a$ formée par Alice comprend en entrée une référence à un UTXO détenu à l'adresse de portefeuille @wallet_a Alice ainsi qu'un script de déverrouillage (représenté par une clé sur la figure). Ce script de déverrouillage contient la clé publique éphémère d'Alice, $P_a$ et une signature de cette clé publique (plus précisément de la transaction dans laquelle la clé publique $P_a$ est substituée au script de déverrouillage, la transaction étant ensuite doublement hachée) au moyen de la clé privée correspondante, $a$.

La transaction $T_a$ comprend en sortie l'adresse de portefeuille du destinataire (Bob), soit @wallet_b Bob ainsi qu'un script de verrouillage (représenté par un cadenas sur la figure) que Bob pourra déverrouiller en fournissant, via un script de déverrouillage, les éléments cryptographiques (clé publique et signature) satisfaisant aux conditions fixées dans le script de verrouillage. Cette sortie de transaction crée un UTXO (@wallet_b Bob-montant) à l'adresse de portefeuille éphémère de Bob. On a également indiqué en sortie l'adresse de portefeuille éphémère d'Alice pour que celle-ci puisse récupérer dans son portefeuille le solde de la transaction (création d'un UTXO dans le portefeuille éphémère d'Alice).

De la même façon, la transaction $T_b$ comprend en entrée une référence à un UTXO détenu à l'adresse de portefeuille @wallet_b Bob, ainsi qu'un script de déverrouillage contenant la clé publique éphémère de Bob, $P_b$, et une signature de cette clé publique au moyen de la clé privée correspondante $b$.

En sortie, la transaction $T_b$ comprend en sortie l'adresse de portefeuille éphémère d'Alice @wallet_a Alice ainsi qu'un script de verrouillage (symbolisé par un cadenas) qu'Alice pourra déverrouiller en fournissant les éléments cryptographiques satisfaisant aux conditions fixées dans le script de verrouillage. Cette sortie crée un UTXO (@wallet_a Alice-montant) à l'adresse de portefeuille éphémère d'Alice. Une deuxième sortie est prévue pour récupérer le solde sous forme d'un UTXO à l'adresse de portefeuille éphémère de Bob.

Les montants des UTXO @wallet_a Alice-montant et @wallet_b Bob-montant peuvent être choisis égaux pour équilibrer l'échange.

Une fois que les transactions $T_a$ et $T_b$ ont été validées, enregistrées dans la chaine de blocs et confirmées par minage, Alice (resp. Bob) scanne le registre distribué à la recherche de la transaction émise par Bob (resp. Alice). Alice récupère dans la partie entrée de $T_b$ la clé publique éphémère $P_b$ de Bob et, réciproquement, Bob récupère dans la partie entrée de $T_a$ la clé publique éphémère $P_a$ d'Alice. Alice calcule alors $aP_b = abG$ et Bob $bP_a = baG$ : Alice et Bob disposent par conséquent de la clé secrète partagée $abG$.

L'auditabilité du registre distribué permet à tous les utilisateurs (nœuds) de vérifier que les clés publiques éphémères utilisées dans cet échange n'ont jamais été utilisées auparavant, que la clé publique $P_a$ appartient bien à Alice (plus précisément est liée à l'adresse de portefeuille éphémère d'Alice) et que la clé publique $P_b$ appartient bien à Bob (plus précisément est liée à l'adresse de portefeuille éphémère de Bob). Ainsi, l'échange de clés entre Alice et Bob peut être authentifié par la chaine de blocs, sans intervention d'un tiers de confiance.

Toutefois, la génération systématique d'adresses de portefeuilles éphémères à chaque échange de clés peut s'avérer compliquée à gérer et coûteuse en termes de ressources de calcul pour les dispositifs distants hébergeant ces portefeuilles.

L'article de Mc Corry et al. Intitulé « Authenticated key exchange over Bitcoin » publié en 2015 dans Chen. L, Matsuo S. (eds.) Security Standardisation Research. Lecture Notes in Computer Science, vol 9497. Springer, décrit une méthode d'échange de clés utilisant comme clés éphémères les clés qui sont utilisées pour signer les transactions. Cette méthode permet de se passer de la génération d'adresses de portefeuilles éphémères mais est en revanche sensible aux attaques contre les signatures ECDSA.

Un objet de la présente invention est par conséquent de proposer une méthode d'échange de clés entre pairs, authentifié par chaine de blocs et donc sans recours à un tiers de confiance, qui ne nécessite pas la génération de portefeuilles éphémères tout en étant robuste aux attaques cryptanalytiques.

## EXPOSÉ DE L'INVENTION

La présente invention est définie par une méthode d'échange de clés entre un premier utilisateur et un second utilisateur d'une chaine de blocs de transactions, chaque utilisateur disposant d'une adresse de portefeuille lui permettant d'émettre et de recevoir des transactions, ladite méthode comprenant les étapes suivantes :

- le premier utilisateur génère une première clé privée éphémère ($a$) et une première clé publique éphémère ($P_a$) correspondante au moyen d'un cryptosystème asymétrique ;
- le premier utilisateur forme et émet une première transaction ($T_A$) dont l'entrée se réfère à un premier UTXO détenu à l'adresse de portefeuille du premier utilisateur et dont la sortie crée un second UTXO dans le portefeuille du second utilisateur, la sortie de la première transaction comprenant en outre un script d'enregistrement de la première clé publique éphémère ($P_a$) dans la chaine de blocs ;
- le second utilisateur scanne la chaine de blocs et accède à la première transaction, après que celle-ci a été confirmée par un minage du bloc qui la contient ;
- le second utilisateur vérifie à partir de l'entrée de la première transaction que celle-ci a bien été émise par l'adresse du portefeuille du premier utilisateur et, dans l'affirmative, lit sur la sortie de la première transaction la première clé publique éphémère ($P_a$) ;
- le second utilisateur génère une seconde clé privée éphémère ($b$) et seconde une clé publique éphémère ($P_b$) correspondante au moyen dudit cryptosystème asymétrique ;

- le second utilisateur forme et émet une seconde transaction ($T_B$) dont l'entrée se réfère à un troisième UTXO détenu à l'adresse de portefeuille du second utilisateur et dont la sortie crée un quatrième UTXO pointant vers le portefeuille du premier utilisateur, la sortie de la seconde transaction comprenant en outre un script d'enregistrement de la seconde clé publique éphémère dans la chaine de blocs ;
- le premier utilisateur scanne la chaine de blocs et accède à la seconde transaction, après que celle-ci a été confirmée par un minage du bloc qui la contient ;
- le premier utilisateur vérifie à partir de l'entrée de la seconde transaction que celle-ci a bien été émise par l'adresse du portefeuille du second utilisateur et lit sur la sortie de la seconde transaction la seconde clé publique éphémère ($P_b$) ;
- le premier utilisateur calcule le produit de la première clé privée éphémère ($a$) avec la seconde clé publique éphémère ($P_b$) et le second utilisateur calcule (280) le produit de la seconde clé privée éphémère ($b$) avec la première clé publique éphémère ($P_a$) pour générer une clé secrète commune ($k_{ab}$).

Avantageusement :

- la première transaction contient en entrée un script de déverrouillage comprenant la clé publique associée à l'adresse de portefeuille du premier utilisateur ainsi qu'une signature numérique de cette clé publique au moyen de la première clé privée éphémère ;
- la seconde transaction contient en entrée un script de déverrouillage comprenant la clé publique associée à l'adresse de portefeuille du second utilisateur ainsi qu'une signature de numérique de cette clé publique au moyen de la seconde clé privée éphémère.

Le cryptosystème asymétrique est de préférence un cryptosystème sur courbe elliptique.

La chaine de blocs est typiquement Bitcoin et le script d'enregistrement des première et seconde transactions contient une opération OP_RETURN, les première et seconde clés publiques éphémères étant stockées par le script d'enregistrement sous forme compressée dans la chaine de blocs.

Alternativement, les première et seconde transactions comprennent en sortie un second script d'enregistrement, le script d'enregistrement et le second script d'enregistrement contenant des opérations OP_RETURN, les première et seconde clés publiques éphémères étant respectivement stockées par le script d'enregistrement et le second script d'enregistrement sous forme complète dans la chaine de blocs.

Les montants des premier et troisième UTXO peuvent être identiques.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1, déjà décrite, représente de manière schématique un échange de clés entre pairs, authentifié par une chaine de blocs, selon une méthode connue de l'état de la technique ;
La Fig. 2 représente de manière schématique un échange de clés entre pairs, authentifié par une chaine de blocs, selon un mode de réalisation de l'invention.

## EXPOSÉ DÉTAILLÉ DE MODES DE RÉALISATION PARTICULIERS

Nous considérons tout d'abord une chaine de blocs de transactions de type Bitcoin, telle que décrite dans la partie introductive et envisagerons à nouveau un échange de clés entre deux utilisateurs de la chaine de blocs, Alice et Bob. Comme nous le verrons par la suite, cet échange de clés peut être généralisé à un échange multilatéral entre pairs. Chaque utilisateur est équipé d'un dispositif de communication embarquant un client blockchain, soit un client léger (par exemple pour un smartphone), soit un client complet (le dispositif est alors un nœud « complet », il possède une copie complète du registre partagé). Chaque utilisateur possède une adresse de portefeuille qui lui permet d'émettre et de recevoir des transactions et des messages.

Préalablement à l'échange de clés, Alice et Bob échangent leurs adresses de portefeuilles par exemple sous forme numérique ou bien sous forme de QR code. L'adresse du portefeuille d'Alice est notée @wallet_Alice et celle du portefeuille de Bob, @wallet_Bob.

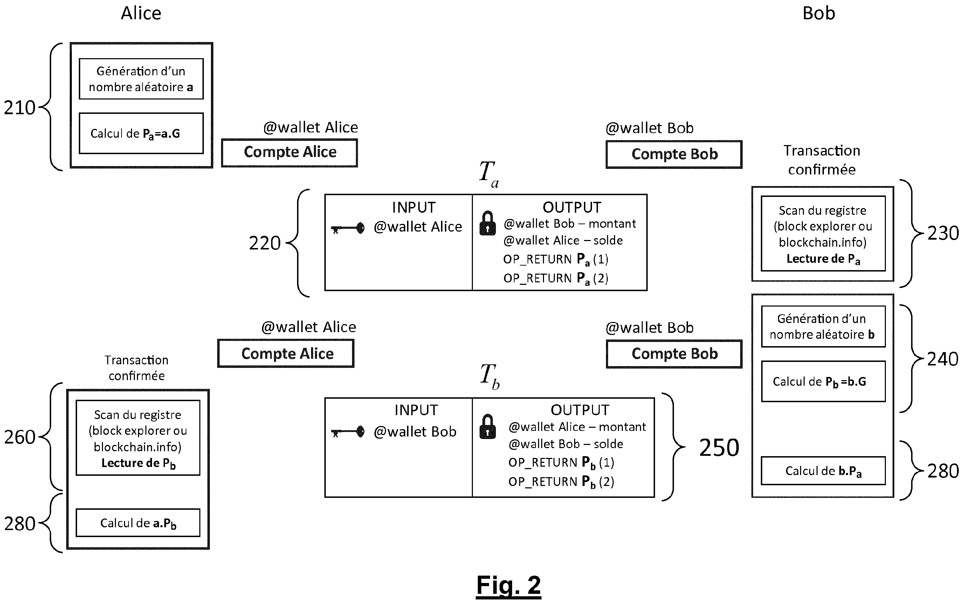

La Fig. 2 décrit schématiquement un procédé d'échange de clés selon un premier mode de réalisation de l'invention.

Dans une première étape, 210, un premier utilisateur (ou premier pair), Alice génère une clé privée $a$ et la clé publique correspondante, $P_a = aG$ où $G$ est le point générateur d'un cryptosystème sur courbe elliptique, par exemple le cryptosystème sur la courbe de Koblitz secp256k1 utilisé dans Bitcoin pour générer les adresses de portefeuilles. La clé $P_a$ est une clé publique éphémère dans la mesure où elle ne servira que pour l'échange de clés entre Alice et Bob.

La clé privée peut être générée de manière aléatoire (portefeuille de clés dit non-déterministe) ou bien de manière déterministe à partir d'un germe (portefeuille de clés dit hiérarchique déterministe) de manière connue en soi.

A l'étape 220, Alice forme une transaction $T_A$ comprenant en entrée une référence à un UTXO (enregistré dans la chaine de blocs et détenu à l'adresse de portefeuille @wallet_Alice) ainsi qu'un script de déverrouillage (symbolisé sur la figure par une clé). Ce script de déverrouillage contient la clé publique $P_a$ correspondant à l'adresse de portefeuille @wallet_Alice d'Alice ainsi qu'une signature de la clé publique d'Alice (plus précisément de la transaction dans laquelle la clé publique $P_a$ est substituée au script de déverrouillage, la transaction étant ensuite doublement hachée) au moyen de sa clé privée. Le script de déverrouillage permet à Alice de dépenser les avoirs contenus dans l'UTXO en question.

Sur une première sortie, la transaction $T_A$ comprend l'adresse de portefeuille du destinataire (second utilisateur ou second pair), Bob, soit @wallet_Bob, le montant convenu pour cette transaction, autrement dit le montant de l'UTXO créé à cette adresse (@wallet_Bob-montant), le tout protégé par un script de verrouillage (cadenas représenté sur la figure). Bob pourra déverrouiller l'UTXO créé par cette sortie en présentant les éléments cryptographiques requis par le script de verrouillage (la clé publique de Bob et sa signature) pour vérifier son identité (plus précisément l'association entre l'adresse de portefeuille @wallet_Bob et la clé publique).

Optionnellement, sur une seconde sortie, la transaction $T_A$ comprend en sortie l'adresse du portefeuille d'Alice pour recevoir le solde de la transaction, si le montant que possède Alice en entrée (figurant dans l'UTXO à l'adresse du portefeuille d'Alice) est supérieur au montant envoyé à Bob (c'est-à-dire au montant figurant dans UTXO créé à l'adresse du portefeuille de Bob).

Sur une troisième sortie, la transaction $T_A$ comprend au moins un script d'enregistrement de données dans la chaine de blocs, OP_RETURN <data>. L'opérateur OP_RETURN crée une entité « *provably unspendable* » qui n'est pas stockée avec les UTXO. Contrairement à un UTXO, l'entité ainsi créée ne peut être ensuite dépensée au moyen d'un script de déverrouillage.

Dans la transaction $T_A$, les données du script OP_RETURN correspondent à la clé publique éphémère $P_a$ sous forme compressée ou sous forme complète. Dans Bitcoin, l'opération OP_RETURN permet de stocker jusqu'à 40 octets dans la chaine de blocs. Une clé publique obtenue avec un cryptosystème elliptique sur courbe secp256l1 peut être stockée sous forme compressée sur 32 octets. Si l'on fait appel à un script OP_RETURN supplémentaire, on pourra stocker jusqu'à 80 octets ce qui permettra de stocker la clé éphémère $P_a$ sous forme complète (64 octets).

Une fois la transaction $T_A$ validée, enregistrée dans la chaine de bloc et confirmée, le montant convenu entre Alice et Bob, correspondant à l'UTXO créé sur la première sortie de $T_A$, est crédité dans le portefeuille de Bob.

Lorsque Bob reçoit la confirmation de ce montant, il scanne en 230 le registre de la chaine de blocs pour visualiser la transaction correspondante. Dans le cas de la chaine de blocs Bitcoin, il peut par exemple utiliser la commande blockchain.info ou block explorer pour visualiser la transaction.

Après avoir retrouvé la transaction, Bob lit sur son entrée l'adresse du portefeuille d'Alice à l'origine de la transaction et la compare à l'adresse que lui avait fourni préalablement Alice (par exemple au moyen d'un QR code). Il peut ainsi s'assurer que ces adresses sont les mêmes. Bob lit ensuite sur le troisième et, le cas échéant, la quatrième sortie(s) de la transaction, la valeur de la clé publique éphémère $P_a$.

A l'étape 240, Bob génère de son côté une clé privée b (par exemple à partir d'un germe) et la clé publique correspondante $P_b = bG$ en utilisant le même cryptosystème sur courbe elliptique que celui utilisé par Alice.

A l'étape 250, Bob forme une transaction $T_B$ de la même façon qu'Alice précédemment. Autrement dit, Bob fournit en entrée de la transaction, dans un script de déverrouillage (par exemple P2PKH dans Bitcoin), les éléments cryptographiques (clé publique de Bob et signature par sa clé privée) nécessaires au déverrouillage du script de verrouillage verrouillant l'UTXO en première sortie de la transaction.

La première sortie de la transaction $T_B$ comprend l'adresse de portefeuille d'Alice, @wallet_Alice, le montant convenu reversé à Alice, le tout protégé par un script de verrouillage (P2PKH par exemple). Alice pourra déverrouiller l'UTXO créé par cette sortie en présentant les éléments cryptographiques requis par le script de verrouillage (la clé publique de Bob et sa signature).

Optionnellement, sur une seconde sortie, la transaction $T_B$ comprend en sortie l'adresse du portefeuille de Bob pour recevoir le solde de la transaction, si le montant que possède Bob en entrée est supérieur au montant envoyé à Alice.

Avantageusement, sur une troisième sortie, la transaction $T_B$ comprend au moins un script d'enregistrement de données dans la chaine de blocs, OP_RETURN <data>, où les données correspondent à la clé publique éphémère $P_b$ sous forme compressée ou sous forme complète. Comme déjà indiqué plus haut, le script OP_RETURN <data> dans Bitcoin permet de stocker 40 octets. Un script supplémentaire d'enregistrement de données permet de stocker 80 octets et donc la clé $P_b$ sous forme complète.

Une fois la transaction $T_B$ validée, enregistrée et confirmée, le montant convenu entre Alice et Bob, correspondant à l'UTXO créé sur la première sortie de $T_B$, est crédité dans le portefeuille de Bob.

Lorsqu'Alice reçoit la confirmation de ce montant, elle scanne en 260 le registre de la chaine de blocs pour visualiser la transaction correspondante (en utilisant par exemple la commande blockchain.info ou block explorer lorsque la chaine de blocs est Bitcoin).

Lorsqu'Alice a retrouvé la transaction, Alice lit sur son entrée l'adresse du portefeuille de Bob à l'origine de la transaction et la compare à l'adresse que lui avait fourni préalablement Bob. Elle s'assure ainsi que ces adresses sont les mêmes. Alice lit ensuite, sur la troisième et, le cas échéant, la quatrième sortie(s) de la transaction, la valeur de la clé publique éphémère de Bob, $P_b$.

A l'étape 280, Alice calcule, à partir de la clé publique éphémère de Bob, la clé secrète $aP_b = abG$. Bob fait de même à partir de clé publique éphémère d'Alice et calcule $bP_a = baG$. Ainsi, Alice et Bob partagent désormais une clé secrète $k_{ab} = abG$ qu'ils peuvent utiliser pour sécuriser un canal de communication soit sur la chaine de blocs, soit sur un canal hors chaine de blocs. Cette clé partagée peut notamment permettre d'assurer la confidentialité de données ou être utiliser à des fins d'authentification.

On notera que les montants @wallet_Bob-montant et @wallet_Alice-montant peuvent être choisis égaux, de manière à ce que le coût de l'échange soit nul ou très faible (limité aux coûts de transaction ou *transaction fees* destinés au minage).

L'homme du métier comprendra que l'échange de clés illustré en Fig. 2 ne nécessite pas l'intervention d'un tiers de confiance. L'auditabilité du registre par les utilisateurs de la chaine de blocs permet à chacun d'entre eux de vérifier que les clés publiques éphémères utilisées lors de ce processus n'ont jamais servi auparavant, que la clé publique $P_a$ appartient bien à Alice (plus précisément est liée de manière biunivoque à l'adresse de portefeuille d'Alice) et que la clé publique $P_b$ appartient bien à Bob (plus précisément est liée de manière biunivoque à l'adresse de portefeuille de Bob). Du fait de cette auditabilité, l'échange de clés est protégé d'une attaque de type Man-In-the-Middle.

Enfin, il est essentiel de noter qu'à la différence de l'art antérieur cité dans la partie introductive, l'échange de clés ne nécessite pas de créer des portefeuilles éphémères mais se contente d'utiliser les portefeuilles existants d'Alice et Bob.

**Revendications**

1. Méthode d'échange de clés entre un premier utilisateur et un second utilisateur d'une chaine de blocs de transactions, chaque utilisateur disposant d'une adresse de portefeuille lui permettant d'émettre et de recevoir des transactions, où :

    - le premier utilisateur génère (210) une première clé privée éphémère (*a*) et une première clé publique éphémère ($P_a$) correspondante au moyen d'un cryptosystème asymétrique ;
    - le premier utilisateur forme et émet (220) une première transaction ($T_A$) dont l'entrée se réfère à un premier UTXO détenu à l'adresse de portefeuille du premier utilisateur et dont la sortie crée un second UTXO dans le portefeuille du second utilisateur, la sortie de la première transaction comprenant en outre un script d'enregistrement de la première clé publique éphémère ($P_a$) dans la chaine de blocs ;

- le second utilisateur scanne (230) la chaine de blocs et accède à la première transaction, après que celle-ci a été confirmée par un minage du bloc qui la contient ;

- le second utilisateur vérifie à partir de l'entrée de la première transaction que celle-ci a bien été émise par l'adresse du portefeuille du premier utilisateur et, dans l'affirmative, lit sur la sortie de la première transaction la première clé publique éphémère ($P_a$);

- le second utilisateur génère (240) une seconde clé privée éphémère ($b$) et une seconde clé publique éphémère ($P_b$) correspondante au moyen dudit cryptosystème asymétrique ;

- le second utilisateur forme et émet (250) une seconde transaction ($T_B$) dont l'entrée se réfère à un troisième UTXO détenu à l'adresse de portefeuille du second utilisateur et dont la sortie crée un quatrième UTXO pointant vers le portefeuille du premier utilisateur, la sortie de la seconde transaction comprenant en outre un script d'enregistrement de la seconde clé publique éphémère dans la chaine de blocs ;

- le premier utilisateur scanne (270) la chaine de blocs et accède à la seconde transaction, après que celle-ci a été confirmée par un minage du bloc qui la contient ;

- le premier utilisateur vérifie à partir de l'entrée de la seconde transaction que celle-ci a bien été émise par l'adresse du portefeuille du second utilisateur et lit sur la sortie de la seconde transaction la seconde clé publique éphémère ($P_b$) ;

- le premier utilisateur calcule (280) le produit de la première clé privée éphémère ($a$) avec la seconde clé publique éphémère ($P_b$) et le second utilisateur calcule (280) le produit de la seconde clé privée éphémère ($b$) avec la première clé publique éphémère ($P_a$) pour générer une clé secrète commune ($k_{ab}$).

2. Méthode d'échange de clés selon la revendication 1, **caractérisée en ce que** :

- la première transaction contient en entrée un script de déverrouillage comprenant la clé publique associée à l'adresse de portefeuille du premier utilisateur ainsi qu'une signature numérique de cette clé publique au moyen de la première clé privée éphémère ;

- la seconde transaction contient en entrée un script de déverrouillage comprenant la clé publique associée à l'adresse de portefeuille du second utilisateur ainsi qu'une signature de numérique de cette clé publique au moyen de la seconde clé privée éphémère.

3. Méthode d'échange de clés selon la revendication 1 ou 2, **caractérisée en ce que** le cryptosystème asymétrique est un cryptosystème sur courbe elliptique.

4. Méthode d'échange de clés selon la revendication 3, **caractérisée en ce que** la chaine de blocs est Bitcoin et que le script d'enregistrement des première et seconde transactions contient une opération OP_RETURN, les première et seconde clés publiques éphémères étant stockées par le script d'enregistrement sous forme compressée dans la chaine de blocs.

5. Méthode d'échange de clés selon la revendication 3, **caractérisée en ce que** la chaine de blocs est Bitcoin et que les première et seconde transactions comprennent en sortie un second script d'enregistrement, le script d'enregistrement et le second script d'enregistrement contenant des opérations OP_RETURN, les première et seconde clés publiques éphémères étant respectivement stockées par le script d'enregistrement et le second script d'enregistrement sous forme complète dans la chaine de blocs.

6. Méthode d'échange de clés selon l'une des revendications précédentes, **caractérisée en ce que** les montants des premier et troisième UTXO sont identiques.

**Patentansprüche**

1. Verfahren zum Austausch von Schlüsseln zwischen einem ersten Nutzer und einem zweiten Nutzer einer Blockchain von Transaktionen, wobei jeder Nutzer eine Portfolio-Adresse besitzt, die es ihm ermöglicht, Transaktionen zu senden und zu empfangen, wobei

- der erste Nutzer einen ersten flüchtigen privaten Schlüssel ($a$) und einen entsprechenden ersten flüchtigen öffentlichen Schlüssel ($P_a$) mit Hilfe eines asymmetrischen Kryptosystems erzeugt (210);

- der erste Nutzer eine erste Transaktion ($T_A$) erstellt und ausgibt (220), deren Eingabe sich auf ein erstes UTXO bezieht, das an der Portfolio-Adresse des ersten Nutzers gehalten wird, und deren Ausgabe ein zweites UTXO im Portfolio des zweiten Nutzers erzeugt, wobei die Ausgabe der ersten Transaktion ferner ein Skript zum Registrieren des ersten flüchtigen öffentlichen Schlüssels ($P_a$) in der Blockchain umfasst;

- der zweite Nutzer die Blockchain scannt (230) und auf die erste Transaktion zugreift, nachdem die erste Transaktion durch Mining des sie enthaltenden Blocks bestätigt wurde;

- der zweite Nutzer anhand der Eingabe der ersten Transaktion überprüft, dass diese von der Portfolio-Adresse des ersten Nutzers ausgegeben wurde, und, wenn dies der Fall ist, aus der Ausgabe der ersten Transaktion den ersten flüchtigen öffentlichen Schlüssel ($P_a$) ausliest;

- der zweite Nutzer einen zweiten flüchtigen privaten Schlüssel ($b$) und einen entsprechenden zweiten flüchtigen öffentlichen Schlüssel ($P_b$) mit Hilfe des asymmetrischen Kryptosystems erzeugt (240);

- der zweite Nutzer eine zweite Transaktion ($T_B$) erstellt und ausgibt (250), deren Eingabe sich auf ein drittes UTXO bezieht, das an der Portfolio-Adresse des zweiten Nutzers gehalten wird, und deren Ausgabe ein viertes UTXO erzeugt, das auf das Portfolio des ersten Nutzers gerichtet ist, wobei die Ausgabe der zweiten Transaktion ferner ein Skript zum Registrieren des zweiten flüchtigen öffentlichen Schlüssels in der Blockchain umfasst;

- der erste Nutzer die Blockchain scannt (270) und auf die zweite Transaktion zugreift, nachdem die zweite Transaktion durch Mining des sie enthaltenden Blocks bestätigt wurde;

- der erste Nutzer anhand der Eingabe der zweiten Transaktion überprüft, dass diese von der Portfolio-Adresse des zweiten Nutzers ausgestellt wurde, und aus der Ausgabe der zweiten Transaktion den zweiten flüchtigen öffentlichen Schlüssel ($P_b$) ausliest;

- der erste Nutzer das Produkt aus dem ersten flüchtigen privaten Schlüssel

($a$) mit dem zweiten flüchtigen öffentlichen Schlüssel ($P_b$) berechnet (280) und der zweite Nutzer das Produkt aus dem zweiten flüchtigen privaten Schlüssel
($b$) mit dem ersten flüchtigen öffentlichen Schlüssel ($P_a$) berechnet (280), um einen gemeinsamen geheimen Schlüssel ($k_{ab}$) zu erzeugen.

2. Verfahren zum Austausch von Schlüsseln nach Anspruch 1, **dadurch gekennzeichnet, dass**:

- die erste Transaktion als Eingabe ein Entsperr-Skript enthält, das aus dem öffentlichen Schlüssel, der mit der Portfolio-Adresse des ersten Nutzers verknüpft ist, und einer digitalen Signatur dieses öffentlichen Schlüssels unter Verwendung des ersten flüchtigen privaten Schlüssels besteht;

- die zweite Transaktion als Eingabe ein Entsperr-Skript enthält, das aus dem öffentlichen Schlüssel, der mit der Portfolio-Adresse des zweiten Nutzers verknüpft ist, und einer digitalen Signatur dieses öffentlichen Schlüssels unter Verwendung des zweiten flüchtigen privaten Schlüssels besteht.

3. Verfahren zum Austausch von Schlüsseln nach Anspruch 1 oder 2, **dadurch gekennzeichnet, dass** das asymmetrische Kryptosystem ein Kryptosystem mit elliptischer Kurve ist.

4. Verfahren zum Austausch von Schlüsseln nach Anspruch 3, **dadurch gekennzeichnet, dass** es sich bei der Blockchain um Bitcoin handelt und das Aufzeichnungsskript der ersten und zweiten Transaktion eine OP_RETURN-Operation enthält, wobei der erste und zweite flüchtige öffentliche Schlüssel von dem Aufzeichnungsskript in komprimierter Form in der Blockchain gespeichert werden.

5. Verfahren zum Austausch von Schlüsseln nach Anspruch 3, **dadurch gekennzeichnet, dass** es sich bei der Blockchain um Bitcoin handelt und dass die erste und die zweite Transaktion als Ausgabe ein zweites Aufzeichnungsskript enthalten, wobei das Aufzeichnungsskript und das zweite Aufzeichnungsskript OP_RETURN-Operationen enthalten, wobei der erste und der zweite flüchtige öffentliche Schlüssel durch das Aufzeichnungsskript bzw. das zweite Aufzeichnungsskript in vollständiger Form in der Blockchain gespeichert werden.

6. Verfahren zum Austausch von Schlüsseln nach einem der vorhergehenden Ansprüche, **dadurch gekennzeichnet, dass** die Beträge der ersten und dritten UTXOs identisch sind.

**Claims**

1. A method for exchanging keys between a first user and a second user of a transaction blockchain, each user having a portfolio address available enabling him/her to transmit and receive transactions, wherein:

- the first user generates (210) a first ephemeral private key ($a$) and a first corresponding ephemeral public key ($P_a$) by means of an asymmetric cryptosystem;

- the first user forms and transmits (220) a first transaction ($T_A$) the input of which refers to a first UTXO held at the first user's portfolio address and the output of which creates a second UTXO in the second user's portfolio, the output of the first transaction further comprising a recording script of the first ephemeral public key ($P_a$) in the blockchain;

- the second user scans (230) the blockchain and accesses the first transaction, after the latter has been confirmed by mining the block containing it;

- the second user checks from the input of the first transaction that the latter has been actually transmitted by the first user's portfolio address and, if so, reads on the output of the first transaction the first ephemeral public key ($P_a$);
- the second user generates (240) a second ephemeral private key ($b$) and a second corresponding ephemeral public key ($P_b$) by means of said asymmetric cryptosystem;
- the second user forms and transmits (250) a second transaction ($T_B$) the input of which refers to a third UTXO held at the second user's portfolio address and the output of which creates a fourth UTXO pointing to the first user's portfolio, the output of the second transaction further comprising a recording script of the second ephemeral public key in the blockchain;
- the first user scans (270) the blockchain and accesses the second transaction, after the latter has been confirmed by mining the block containing it;
- the first user checks from the input of the second transaction that the latter has been actually transmitted by the second user's portfolio address and reads on the output of the second transaction the second ephemeral public key ($P_b$);
- the first user computes (280) the product of the first ephemeral private key ($a$) with the second ephemeral public key ($P_b$) and the second user computes (280) the product of the second ephemeral private key ($b$) with the first ephemeral public key ($P_a$) to generate a common secrete key ($k_{ab}$).

2. The method for exchanging keys according to claim 1, **characterised in that**:

- the first transaction includes as an input an unlocking script comprising the public key associated with the first user's portfolio address as well as a digital signature of this public key by means of the first ephemeral private key;
- the second transaction includes as an input an unlocking script comprising the public key associated with the second user's portfolio address as well as a digital signature of this public key by means of the second ephemeral private key.

3. The method for exchanging keys according to claim 1 or 2, **characterised in that** the asymmetric cryptosystem is an elliptic curve cryptosystem.

4. The method for exchanging keys according to claim 3, **characterised in that** the blockchain is Bitcoin and the recording script of the first and second transactions includes an OP_RETURN operation, the first and second ephemeral public keys being stored by the recording script in a compressed form in the blockchain.

5. The method for exchanging keys according to claim 3, **characterised in that** the blockchain is Bitcoin and the first and second transactions comprise as an output a second recording script, the recording script and the second recording script including OP_RETURN operations, the first and second ephemeral public keys being respectively stored by the recording script and the second recording script in a complete form in the blockchain.

6. The method for exchanging keys according to one of the previous claims, **characterised in that** the amounts of the first and third UTXOs are identical.

# Alice

# Bob

Dérivation d'une adresse de portefeuille éphémère depuis la parent master key d'Alice

Child public key $P_a$
**@wallet_a**

Dérivation d'une adresse de portefeuille éphémère depuis la parent master key de Bob

Child public key $P_b$
**@wallet_b**

@wallet_a Alice

**Compte Alice**

@wallet_b Bob

**Compte Bob**

$T_a$

110

| INPUT | OUTPUT |
|---|---|
| @wallet_a Alice | @wallet_b Bob – montant |
| | @wallet_a Alice – solde |

Transaction confirmée

Scan du registre (block explorer ou blockchain.info)
**Lecture de $P_b$**
(fourni pour le script de déverrouillage)

Calcul de **a.$P_b$**

Transaction confirmée

Scan du registre (block explorer ou blockchain.info)
**Lecture de $P_a$**
(fourni pour le script de déverrouillage)

Calcul de **b.$P_a$**

@wallet_a Alice

**Compte Alice**

@wallet_b Bob

**Compte Bob**

$T_b$

| INPUT | OUTPUT |
|---|---|
| @wallet_b Bob | @wallet_a Alice – montant |
| | @wallet_b Bob – solde |

120

## Fig. 1

EP 3 506 556 B1

Alice                                                                                    Bob

210 {
    Génération d'un
    nombre aléatoire **a**

    Calcul de $P_a$=a.G
}

@wallet Alice
**Compte Alice**

@wallet Bob
**Compte Bob**

Transaction
confirmée

$T_a$

220 {
    INPUT
    🗝️ @wallet Alice

    🔒 OUTPUT
    @wallet Bob – montant
    @wallet Alice – solde
    OP_RETURN $P_a$ (1)
    OP_RETURN $P_a$ (2)
}

230 }
    Scan du registre
    (block explorer ou
    blockchain.info)
    **Lecture de $P_a$**

@wallet Alice
**Compte Alice**

@wallet Bob
**Compte Bob**

Génération d'un
nombre aléatoire **b**

Calcul de $P_b$ =b.G
} 240

$T_b$

Transaction
confirmée

260 {
    Scan du registre
    (block explorer ou
    blockchain.info)
    **Lecture de $P_b$**

250 {
    INPUT
    🗝️ @wallet Bob

    🔒 OUTPUT
    @wallet Alice – montant
    @wallet Bob – solde
    OP_RETURN $P_b$ (1)
    OP_RETURN $P_b$ (2)
}

280 {
    Calcul de **a.$P_b$**

Calcul de **b.$P_a$**
} 280

**Fig. 2**

EP 3 506 556 B1

# EP 3 506 556 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.M. ANTONOPOULOS.** Mastering Bitcoin. 2015
- Authenticated key exchange over Bitcoin. **MC CORRY et al.** Security Standardisation Research. Lecture Notes in Computer Science. Springer, 2015, vol. 9497